# EUROPEAN PATENT APPLICATION

(11) **EP 4 429 291 A1**
(43) Date of publication of application: **11.09.2024**
(21) Application number: 22889354.1
(22) Date of filing: 03.11.2022
(51) Int. Cl.: H04W 8/18, H04W 76/50

(54) **INFORMATION PROCESSING METHOD AND APPARATUS, AND COMMUNICATION DEVICE AND READABLE STORAGE MEDIUM**

(30) Priority: 05.11.2021 CN 202111308807
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Lavoix
(86) International application number: PCT/CN2022/129475
(87) International publication number: WO 2023/078332

(57) **Abstract**

This application discloses an information processing method and apparatus, a communication device, and a readable storage medium, and pertains to the field of communication technologies. The method includes: performing, by a first communication device, a first operation in a case that a first condition is satisfied; where the first operation includes at least one of the following: a second operation and a third operation. The second operation includes at least one of the following: determining one of the following: a first feature being not supported and a multi-subscriber feature being not supported; storing one of the following in a context of a terminal: a first feature being not supported and a multi-subscriber feature being not supported; and sending one of the following to a first target end: a first feature being not supported and a multi-subscriber feature being not supported; where the multi-subscriber feature is an optimization function for a multi-subscriber terminal.

## Description

### CROSS-REFERENCE TO RELATED APPLICATIONS

This application claims priority to Chinese Patent Application No. 202111308807.8, filed in China on November 05, 2021, which is incorporated herein by reference in its entirety.

### TECHNICAL FIELD

This application pertains to the field of communication technologies, and specifically, relates to an information processing method and apparatus, a communication device, and a readable storage medium.

### BACKGROUND

In related-art networks, multi-subscriber terminals (such as multi-universal subscriber identity module (Multi-Universal Subscriber Identity Module, MUSIM)) are more and more commonly used, and the multi-subscriber terminal may have two or more pieces of subscriber data (such as subscriber identity modules (Subscriber Identity Module, SIM) or universal subscriber identity modules (Universal Subscriber Identity Module, USIM)). However, it is not clear how to use an optimization function for multi-subscriber terminals during emergency registration with a network.

### SUMMARY

Embodiments of this application provide an information processing method and apparatus, a communication device, and a readable storage medium, so as to resolve the problems of indicating not supporting an optimization function for multi-subscriber terminals and related operations being not performed in an emergency registration scenario.

According to a first aspect, an information processing method is provided, applied to a first communication device and including:
performing, by a first communication device, a first operation in a case that a first condition is satisfied; where
the first operation includes at least one of the following: a second operation and a third operation;
the second operation includes at least one of the following:
   determining one of the following: a first feature being not supported and a multi-subscriber feature being not supported;
   storing one of the following in a context of a terminal: a first feature being not supported and a multi-subscriber feature being not supported; and
   sending one of the following to a first target end: a first feature being not supported and a multi-subscriber feature being not supported; where the multi-subscriber feature is an optimization function for a multi-subscriber terminal; and
   the third operation includes at least one of the following:
      rejecting a request of the terminal for a first-feature related operation, or rejecting a request of the terminal for a multi-subscriber-feature related operation;
      ignoring a request of the terminal for a first-feature related operation, or ignoring a request of the terminal for a multi-subscriber-feature related operation;
      not performing a first-feature related operation for the terminal, or not performing a multi-subscriber-feature related operation for the terminal;
      based on connection release request information of the terminal, performing at least one of the following: deregistering the terminal and releasing a connection between the terminal and a network; and
      based on paging rejection information of the terminal, performing at least one of the following: stopping paging the terminal, deregistering the terminal, and releasing a connection between the terminal and the network; where
      the first target end includes at least one of the following: a terminal and a RAN network element.

According to a second aspect, an information processing method is provided, applied to a terminal and including:
performing, by a terminal, a fourth operation in a case that a second condition is satisfied; where
the fourth operation includes at least one of the following:
   not applying a first feature to a first network or not applying a multi-subscriber feature to a first network; where the multi-subscriber feature is an optimization function for a multi-subscriber terminal;
   not initiating a first-feature related operation in the first network, or not initiating the multi-subscriber-feature related operation in the first network;
   not performing paging optimization in the first network;
   not sending paging restriction information to the first network in a case that the terminal moves out of a location area to make a mobility registration update request and/or does not known whether the first feature or multi-subscriber feature is supported in a new location area; and
   deregistering from the first network in a case that the terminal needs to leave the first network; where
   the paging optimization includes at least one of the following: avoiding a paging collision and optimizing a paging reception probability.

According to a third aspect, an information processing method is provided, applied to a terminal and including:
performing, by a terminal, a sixth operation in a case that a third condition is satisfied; where
the sixth operation includes at least one of the following:
   applying a first feature or a multi-subscriber feature to a first network; where the multi-subscriber feature is an optimization function for a multi-subscriber terminal;
   initiating a first-feature related operation in the first network, or initiating the multi-subscriber-feature related operation in the first network;
   performing paging optimization in the first network;
   sending paging restriction information to the first network in a case that the terminal moves out of a location area to make a mobility registration update request and/or does not known whether the first feature or multi-subscriber feature is supported in a new location area; and
   connection release request information can be sent to the first network in a case that the terminal needs to leave the first network.
   the paging optimization includes at least one of the following: avoiding a paging collision and optimizing a paging reception probability.

According to a fourth aspect, an information processing method is provided, including:
performing, by a terminal, a seventh operation in a case that a fourth condition is satisfied; where
the fourth condition includes at least one of the following:
   the terminal is in a registered state or a connected state in a third network;
   the terminal uses first subscriber data to access the third network; and
   the terminal passes device identification authentication of the third network by using a first terminal device identifier, or a terminal device identifier bound by the first subscriber data is a first terminal device identifier; and
   the seventh operation includes at least one of the following:
      maintaining a terminal device identifier corresponding to the first subscriber data as the first terminal device identifier; and
      sending the first terminal device identifier to the third network in a case that the third network requests to obtain an device identifier of the terminal.

According to a fifth aspect, an information processing apparatus is provided, applied to a first communication device and including:
a first execution module, configured to perform a first operation in a case that a first condition is satisfied; where
the first operation includes at least one of the following: a second operation and a third operation;
the second operation includes at least one of the following:
   determining one of the following: a first feature being not supported and a multi-subscriber feature being not supported;
   storing one of the following in a context of a terminal: a first feature being not supported and a multi-subscriber feature being not supported; and
   sending one of the following to a first target end: a first feature being not supported and a multi-subscriber feature being not supported; where the multi-subscriber feature is an optimization function for a multi-subscriber terminal; and
   the third operation includes at least one of the following:
      rejecting a request of the terminal for a first-feature related operation, or rejecting a request of the terminal for a multi-subscriber-feature related operation;
      ignoring a request of the terminal for a first-feature related operation, or ignoring a request of the terminal for a multi-subscriber-feature related operation;
      not performing a first-feature related operation for the terminal, or not performing a multi-subscriber-feature related operation for the terminal;
      based on connection release request information of the terminal, performing at least one of the following: deregistering the terminal and releasing a connection between the terminal and a network; and
      based on paging rejection information of the terminal, performing at least one of the following: stopping paging the terminal, deregistering the terminal, and releasing a connection between the terminal and the network; where
      the first target end includes at least one of the following: a terminal and a RAN network element.

According to a sixth aspect, an information processing apparatus is provided, applied to a terminal and including:
a second execution module, configured to perform a fourth operation in a case that a second condition is satisfied; where

The fourth operation includes at least one of the following:
not applying a first feature to a first network or not applying a multi-subscriber feature to a first network; where the multi-subscriber feature is an optimization function for a multi-subscriber terminal;
not initiating a first-feature related operation in the first network, or not initiating the multi-subscriber-feature related operation in the first network;
not performing paging optimization in the first network;
not sending paging restriction information to the first network in a case that the terminal moves out of a location area to make a mobility registration update request and/or does not known whether the first feature or multi-subscriber feature is supported in a new location area; and
deregistering from the first network in a case that the terminal needs to leave the first network; where
the paging optimization includes at least one of the following: avoiding a paging collision and optimizing a paging reception probability.

According to a seventh aspect, an information processing apparatus is provided, applied to a terminal and including:
a third execution module, configured to perform a sixth operation in a case that a third condition is satisfied; where
the sixth operation includes at least one of the following:
   applying a first feature or a multi-subscriber feature to a first network; where the multi-subscriber feature is an optimization function for a multi-subscriber terminal;
   initiating a first-feature related operation in the first network, or initiating the multi-subscriber-feature related operation in the first network;
   performing paging optimization in the first network;
   sending paging restriction information to the first network in a case that the terminal moves out of a location area to make a mobility registration update request and/or does not known whether the first feature or multi-subscriber feature is supported in a new location area; and
   connection release request information can be sent to the first network in a case that the terminal needs to leave the first network.
   the paging optimization includes at least one of the following: avoiding a paging collision and optimizing a paging reception probability.

According to an eighth aspect, an information processing apparatus is provided, applied to a terminal and including:
a fourth execution module, configured to perform a seventh operation in a case that a fourth condition is satisfied; where
the fourth condition includes at least one of the following:
   the terminal is in a registered state or a connected state in a third network;
   the terminal uses first subscriber data to access the third network; and
   the terminal passes device identification authentication of the third network by using a first terminal device identifier, or a terminal device identifier bound by the first subscriber data is a first terminal device identifier; and
   the seventh operation includes at least one of the following:
      maintaining a terminal device identifier corresponding to the first subscriber data as the first terminal device identifier; and
      sending the first terminal device identifier to the third network in a case that the third network requests to obtain an device identifier of the terminal.

According to a ninth aspect, a communication device is provided, including a processor, a memory, and a program or instructions stored in the memory and capable of running on the processor, and when the program or the instructions are executed by the processor, the steps of the information processing method according to the first aspect, the second aspect, the third aspect, or the fourth aspect are implemented.

According to a tenth aspect, a readable storage medium is provided, where a program or instructions are stored in the readable storage medium, and when the program or the instructions are executed by a processor, the steps of the information processing method according to the first aspect, the second aspect, the third aspect, or the fourth aspect are implemented.

According to an eleventh aspect, a chip is provided, where the chip includes a processor and a communication interface, the communication interface is coupled to the processor, and the processor is configured to run a program or instructions to implement the steps of the information processing method according to the first aspect, the second aspect, the third aspect, or the fourth aspect.

According to a twelfth aspect, a computer program/program product is provided, where the computer program/program product is stored in a non-transitory storage medium, and the program/program product is executed by at least one processor to implement the steps of the information processing method according to the first aspect, the second aspect, the third aspect, or the fourth aspect.

According a thirteenth aspect, a communication device is provided, and configured to implement the steps of the information processing method according to the first aspect, the second aspect, the third aspect, or the fourth aspect.

In the embodiments of this application, regardless of whether the terminal requests the first-feature related operation or the multi-subscriber-feature related operation, the first communication device can indicate, to the terminal, the first feature being not supported or the multi-subscriber feature being not supported, so that the network side and the terminal can separately prohibit the first feature or the multi-subscriber feature in some scenarios (such as emergency service scenarios), thereby improving reliability of the communication system.

### BRIEF DESCRIPTION OF DRAWINGS

FIG. 1 is a block diagram of a wireless communication system to which the embodiments of this application are applicable;
FIG. 2 is a schematic flowchart of an information processing method according to an embodiment of this application;
FIG. 3 is a schematic flowchart of another information processing method according to an embodiment of this application;
FIG. 4 is a schematic flowchart of still another information processing method according to an embodiment of this application;
FIG. 5 is a schematic flowchart of still another information processing method according to an embodiment of this application;
FIG. 6 is a schematic flowchart of a registration procedure according to Embodiment 1 of this application;
FIG. 7 is a schematic structural diagram of an information processing apparatus according to an embodiment of this application;
FIG. 8 is a schematic structural diagram of another information processing apparatus according to an embodiment of this application;
FIG. 9 is a schematic structural diagram of still another information processing apparatus according to an embodiment of this application;
FIG. 10 is a schematic structural diagram of still another information processing apparatus according to an embodiment of this application; and
FIG. 11 is a structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "I" generally indicates that the associated objects are in an "or" relationship.

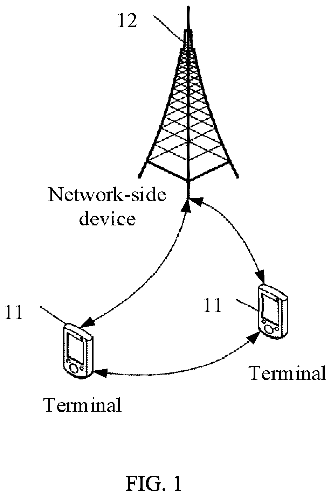

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved Node B, eNB), a home NodeB, a home evolved NodeB, a wireless local area network (Wireless Local Area Network, WLAN) access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the new radio (New Radio, NR) system is merely used as an example, and a specific type of the base station is not limited.

In an optional embodiment of this application, "being able to" may mean at least one of the following: being allowed, supporting, being inclined, or being preferred to have a capability; and "being unable to" may mean at least one of the following: being not allowed, not supporting, being not inclined, or not having a capability.

In an optional embodiment of this application, "supporting" may mean at least one of the following: being allowed, being able to, being inclined, or being preferred to have a capability; and "not supporting" may mean at least one of the following: being not allowed, being unable to, being not inclined, or not having a capability.

In an optional embodiments of this application, obtaining or acquiring may be understood as acquiring from configuration, receiving, obtaining through receiving upon a request, obtaining through self-learning, obtaining through deduction based on non-received information, or obtaining through processing received information, which may be determined according to actual needs. This is not limited in the embodiments of this application. For example, when specific capability indication information sent by a device is not received, it can be deduced that the device does not support such capability.

In an optional embodiment of this application, transmitting may include broadcasting, broadcasting through a system message, or returning a response after receiving the request.

In an optional embodiment of this application, separate and independent may represent the same meaning and may be used interchangeably.

In an optional embodiment of this application, the communication device may include at least one of the following: a network-side device (including a communication network element) and a terminal.

In an optional embodiment of this application, the communication network element may include at least one of the following: a core-network network element and a radio-access-network network element.

In an optional embodiment of this application, a core network (Core Network, CN) network element may represent one of the following: a core network device, a core network communication device, a core network node, a core network function, and a core network unit. The core-network network element, the core network device, the core network communication device, the core network node, the core network function, and/or the core network unit may include but is not limited to at least one of the following: a mobility management entity (Mobility Management Entity, MME), an access and mobility management function (Access and Mobility Management Function, AMF), a session management function (Session Management Function, SMF), a user plane function (User Plane Function, UPF), a serving gateway (serving GW, SGW), a public data network gateway (Public Data Network Gate Way, PDN GW), a policy control function (Policy Control Function, PCF), a policy and charging rules function unit (Policy and Charging Rules Function, PCRF), a general packet radio service (General Packet Radio Service, GPRS) serving support node (Serving GPRS Support Node, SGSN), a gateway GPRS support node (Gateway GPRS Support Node, GGSN), a unified data management (Unified Data Management, UDM), a unified data repository (Unified Data Repository, UDR), a home subscriber server (Home Subscriber Server, HSS), and an application function (Application Function, AF).

In an optional embodiment of this application, a radio access network element may represent one of the following: a radio (access) network (Radio Access Network, RAN) device, a RAN communication device, a RAN node, a RAN function, and a RAN unit. The RAN network element, the RAN device, the RAN communication device, the RAN node, and/or the RAN function, and the radio access network element may include but is not limited to at least one of the following: third generation partnership projects (Third Generation Partnership Projects, 3GPP) radio access network, non-3GPP radio access network, centralized unit (Centralized Unit, CU), distributed unit (Distributed Unit, DU), base station, evolved Node B (evolved Node B, eNB), fifth generation mobile communication technology (5^{th}-Generation, 5G) base station (NR Node B, GNB), radio network controller (Radio Network Controller, RNC), base station (NodeB), non-3GPP interworking function (Non-3GPP Inter Working Function, N3IWF), access control (Access Controller, AC) node, access point (Access Point, AP) device or wireless local area network (Wireless Local Area Networks, WLAN) node, and N3IWF.

In an optional embodiment of this application, the network is a mobile communication network.

In an optional embodiment of this application, activated may alternatively be referred to as one of the following: active and enabled. Invalid may represent not enabled and not existing. In an optional embodiment of the present invention, an invalid deregistered status of subscriber data, such as SGMM-DEREGISTERED.NO-SUPI, indicates that the terminal has no corresponding valid subscriber data (for example, USIM unavailable or subscriber data unavailable).

In an optional embodiment of this application, available includes idle.

In an optional embodiment of this application, an idle or available device identifier includes: a device identifier not bound to subscriber data, and a device identifier not in a registered state. For example, the terminal may initiate emergency registration by using a device identifier of the terminal. In this case, in an implementation, even if the device identifier is not bound to any one piece of subscriber data, the device identifier is also considered to be already occupied and can no longer be bound to subscriber data. After the device identifier is deregistered, the terminal may consider that the device identifier turns to an idle state again.

In an optional embodiment of the present invention, the subscriber (Subscriber) data may be used for at least one of the following: access of the terminal to the network, network authentication and/or access of an authorized terminal, and terminal identification by the network.

In an optional embodiment of the present invention, a network corresponding to the subscriber data is a network to which the terminal is subscribed. For example, the terminal is subscribed to a network A, and after obtaining subscriber data corresponding to the network A, uses the subscriber data to access the network A and/or other roaming-allowed networks.

In an optional embodiment of the present invention, the subscriber data includes at least one of the following: credential, subscription data, terminal subscriber identifier, and information about a network corresponding to the subscriber data.

In an optional embodiment of the present invention, the credential in the subscriber data is a network credential of the subscriber. In an implementation, one piece of subscriber data includes one credential or a group of credentials.

In an optional embodiment of the present invention, the subscription data in the subscriber data is subscription information of the subscribed-to network. The subscription data may be a collection of subscription information of the subscriber for a group of network services, for example, at least one of the following: voice, SMS, and data traffic.

In an implementation, one piece of subscriber data includes one terminal subscriber identifier (such as a terminal identifier). In this case, the terminal subscriber identifier may be a permanent terminal subscriber identifier (such as a subscription permanent identifier (Subscription Permanent Identifier, SUPI) and an international mobile subscriber identification (International Mobile Subscriber Identification, IMSI)).

In an implementation, one piece of subscriber data includes one network or a group of networks.

In an optional embodiment of the present invention, the information of the network includes at least one of the following: a network identifier and a network type. The network type includes at least one of the following: public network (such as public land mobile network (Public Land Mobile Network, PLMN)) and non-public network. The non-public network includes stand-alone non-public network (such as stand-alone non-public network (Stand-alone Non-Public Network, SNPN)) and integrated non-public network (such as public network integrated non-public network (Public Network Integrated Non-Public Network, PNI NPN)).

Each piece of subscriber data is correspondingly applied to one terminal identifier and/or one network, and for the terminal identifier, each set of subscriber data can be applied to one registration.

In an optional embodiment of the present invention, subscriber data of a universal integrated circuit card (Universal Integrated Circuit Card, UICC) type includes subscriber data stored in the UICC. The subscriber data of the UICC type is, for example, subscriber data in the form of USIM. The subscriber data of the UICC type may be referred to as USIM.

In an optional embodiment of the present invention, subscriber data of a non-UICC type includes subscriber data not stored in UICC.

In an optional embodiment of the present invention, one piece of subscriber data may be embodied as one USIM, and one entry in a subscriber data list is, for example, an entry of the "list of subscriber data" with the SNPN identity of the SNPN.

In an optional embodiment of this application, one subscriber may be understood as one UE, and one terminal with multiple subscribers may be embodied as multiple UEs. From the perspective of the network, one subscriber is one UE. When one terminal accesses the network using a plurality of pieces of subscriber data, from the perspective of the network, the terminal is multiple UEs.

In an optional implementation of the present invention, the user or subscriber is a subscriber. Generally, one subscriber may correspond to one credential. One subscriber is embodied as one UE. It is not difficult to understand that one terminal device may be embodied as multiple UEs in a case that one terminal device has multiple subscribers.

In the embodiments of this application, the following problems need to be solved:
Problem 1: Generally, for emergency registration, only an emergency call can be initiated. During the emergency call, it is best for the terminal not to leave the network. Generally, there is no paging during emergency registration, and all paging causes indicate generally not being supported. One discussion idea is that the optimization function for the multi-subscriber terminal is not supported in emergency registration, and the optimization function for the multi-subscriber terminal (such as MUSIM feature (MUSIM feature)) sent by the terminal to the network is not supported. Subsequently, the multi-subscriber feature is used as an abbreviation of the optimization function for the multi-subscriber terminal. The problem is that the terminal may not be trustworthy, and in a case of emergency registration, still sends its capability with the multi-subscriber feature to the network.

To resolve the above problems, one solution is that the network indicates, to the terminal, the multi-subscriber feature being not supported, regardless of whether the terminal sends the capability with or without the multi-subscriber feature to the network. Another solution is to allow the connection release function of the terminal, but indicate, to the terminal, that multi-subscriber features other than the connection release function are not supported.

In addition, generally, when receiving the multi-subscriber feature being not supported sent by the network, the terminal does not perform the corresponding multi-subscriber-feature related operation. However, there are still some multi-subscriber-feature related operations in the terminal, which are not limited by the multi-subscriber feature being not supported sent by the network, including: (1) When a paging collision occurs or a temporary identifier of the terminal needs to be updated (such as SG-globally unique temporary UE identity (SG-Globally Unique Temporary UE Identity, 5G-GUTI)), a mobility registration request is sent to the first network. (2) When mobility registration is caused by moving out of the location area, paging restriction (Paging Restriction, PR) can be sent to the first network. For the operation (1), there is no corresponding indication of the multi-subscriber feature being supported or not supported sent by the network. When the operation (2) occurs, the terminal may not be able to receive the indication of the multi-subscriber feature being supported or not supported sent by the network.

One solution is that the terminal does not perform operations (1) and (2) in case of emergency registration.

Problem 2: The number of subscriber data (such as network credential and/or subscription data) on the terminal exceeds the number of device identifiers, and when the terminal uses subscriber data to access the network, some subscribers cannot pass the terminal device identifier verification by the network. However, considering a radio frequency capability of the terminal, subscriber data that the terminal can enable at the same time is limited, such as registering to two networks at the same time. Therefore, it is a great waste to configure a device identifier for each subscriber data. One solution is that the terminal can maintain a lot of subscriber data, but the number of subscriber data activated at the same time should not exceed the number of device identifiers of the terminal. On the one hand, it can support the network to verify the device identifier of the terminal; on the other hand, it can reduce the waste of device identifiers. However, in a case that the UE is in a registered or connected state in the network, if binding between the terminal device identifier and the subscriber data is released or changed, the network may find that a device identifier of one subscriber has changed or the device identifier is lost, resulting in network confusion. One solution is: in a case that the terminal uses one piece of subscriber data to register to the network and the terminal is in a registered state, the terminal keeps a terminal device identifier corresponding to the subscriber data unchanged. In a network deregistered by the terminal, a binding relationship between the two can be released.

In an optional embodiment of this application, the terminal identifier includes at least one of the following: a permanent terminal identifier (such as SUPI, subscription concerted identifier (Subscription Concerted Identifier, SUCI), IMSI), and a temporary terminal identifier (such as GUTI, 5G GUTI).

In an optional implementation of the present invention, the terminal identifier may be a terminal subscriber identifier (such as a UE identifier) or a terminal user identifier (such as a UE identifier).

In an optional implementation of the present invention, a location area is an area range configured for the terminal by the network, and a mobility registration request needs to be initiated in a case of moving out of the location area. The location area is also referred to as a registration area. The mobility registration request may also be referred to as a location update request.

In an optional embodiment of this application, the temporary terminal identifier includes a temporary terminal identifier and a temporary UE identifier.

In an optional embodiment of this application, the terminal identifier does not include a terminal device identifier.

In an optional embodiment of this application, the type of the terminal device identifier includes at least one of the following: permanent device identifier (Permanent Device identifier, PEI), international mobile station equipment identity (International Mobile Station Equipment Identity, IMEI), and international mobile station equipment identity and software version number (International Mobile station Equipment Identity and Software Version number, IMEISv).

In an optional embodiment of this application, in an embodiment of the present invention, the emergency service includes: emergency voice service, emergency callback, and emergency call.

In an optional embodiment of this application, the subscriber or subscriber data includes subscriber data of the SIM, USIM, or non-(U)SIM (such as non-USIM and/or SIM) type. The subscriber data of the non-(U)SIM type may include at least one of the following: virtual card, and subscriber data stored in terminal device (such as mobile equipment (Mobile Equipment, ME)). Therefore, multiple subscribers include multiple USIMs. The multi-subscriber feature includes the multi-USIM feature.

In an optional embodiment of this application, the multi-subscriber includes two or more subscribers.

In an optional embodiment of this application, connection release includes releasing to a non-connected state, and the non-connected state includes at least one of the following: an idle state and an inactive (Inactive) state (such as radio resource control (Radio Resource Control, RRC) inactive). In an implementation, releasing a connection between the terminal and the network includes releasing the connection between the terminal and the network to a non-connected state.

For ease of understanding of the embodiments of this application, the following terms are first described:

### 1. Paging cause indication function

In an optional embodiment of this application, the paging message includes at least one of the following: a paging message of air interface (Uu interface); and a notification message in a non-access stratum (Non-Access Stratum, NAS) message.

In an optional embodiment of this application, the paging message contains related information for indicating the paging cause. In an implementation, the related information for indicating the paging cause includes at least one of the following: the number of terminals for indicating the paging cause as a first value, the number of terminals for indicating the paging cause as a second value, and a bit sequence for indicating the paging cause as a first value and/or a second value.

In an optional embodiment of this application, RAN paging is paging initiated by the RAN, such as a paging message initiated by a terminal in an RRC inactive state.

In an optional embodiment of this application, the paging cause at least supports voice.

In an optional embodiment of this application, the paging cause being unknown means that it is uncertain whether a reason or data that triggers paging is voice or non-voice.

In an optional embodiment of this application, the paging cause is a type of data that triggers paging. The type of data includes a service type of the data. Optionally, the type of service and/or data can be embodied as a paging cause in the paging message and notification type information in the notification message. The type of service and/or data may be a type of service and/or data on the network side. The type of data includes a type of service to which data belongs and the type of data itself (such as control plane signaling).
(1) In an optional embodiment of this application, the network supporting the paging cause indication function includes at least one of the following:
   determining the type of data;
   including the type of data as a paging cause into a paging request message and/or paging message related to the terminal; and
   determining, based on the type of data, whether the paging message contains information related to the paging cause (such as information element (Information Element, IE)); where
   the data is at least one of the following: data that triggers paging of the terminal, and received or generated data about the terminal.
(2) In an optional embodiment of this application, the CN network element supporting the paging cause indication function in the network includes at least one of the following:
   determining the type of data, and sending the type of data as a paging cause to the terminal; and
   determining, based on the type of data, whether the paging message contains information related to the paging cause (such as information element (Information Element, IE)); where
   the data is at least one of the following: data that triggers paging of the terminal, and received or generated data about the terminal.
(3) In an optional embodiment of this application, the RAN network element supporting the paging cause indication function in the network includes at least one of the following:
   understanding paging cause related information in a paging request message triggered by the CN network element;
   including paging cause related information into a paging message of the air interface;
   for a terminal in an inactive state, determining the type of data;
   for a terminal in an inactive state, determining, based on the type of data, a cause that triggers paging of the terminal;
   determining, based on the type of data or the determined paging cause, whether the paging message contains information related to the paging cause (such as information element (Information Element, IE)); and
   including the type of data as a paging cause into a paging message related to the terminal or including the determined paging cause into the paging message related to the terminal.

The data is at least one of the following: data that triggers paging of the terminal, and received or generated data about the terminal.

In an implementation, only in a case that the paging cause is determined to be a first value, the determined paging cause is included in the paging message related to the terminal.

(4) In an optional embodiment of this application, the paging cause indication function supported by the terminal includes at least one of the following: understanding a value of the paging cause and determining the type of data. The data is at least one of the following: data that triggers paging of the terminal.

In an optional embodiment of this application, the first value includes at least one of the following: voice, SMS, IP multiple subsystem (IP Multiple Subsystem, IMS) signaling, control plane signaling, and system message change.

In an optional embodiment of this application, the second value includes one of the following: non-voice, another value beyond a value range of the first value, and other paging causes that trigger paging outside the value range of the first value.

In an optional embodiment of this application, the value range of the first value includes at least one of the following: voice, SMS, IMS signaling, and control plane signaling.

Optionally, the first value is one or more in the value range of the first value.

Example 1: The value range of the first value may include X, Y, and Z. Then, the second value may be paging causes that trigger paging other than X, Y, and Z.
(1) In an implementation, the cause for triggering paging or the type of data for triggering paging is X; then, the first value is X.
(2) In another implementation, the cause for triggering paging or the type of data for triggering paging is X and Y; then, the first value is X and Y.
(3) In another implementation, the cause for triggering paging or the type of data for triggering paging is A; then, the cause for triggering paging is a second value.

Example 2: The value range of the first value may be X. Then, the second value may be non-X.
(1) In an implementation, the cause for triggering paging or the type of data for triggering paging is X; then, the first value received by the terminal in this case is X.
(2) In another implementation, the cause for triggering paging or the type of data for triggering paging is X and Y; then, the paging cause is one of the following: the first value (that is, X), and the first value and/or the second value.
(3) In another implementation, the cause for triggering paging or the type of data for triggering paging is Y; then, the paging cause is a second value.

In an optional embodiment of this application, the type of data includes but is not limited to at least one of the following: control plane signaling (such as NAS signaling), user plane data, and a service type to which data belongs. The control plane signaling may include, but is not limited to, at least one of the following: CN location update.

In an optional embodiment of this application, the type of service and/or data may include, but is not limited to, at least one of the following: IMS, IMS voice service, location service (LCS), SMS, control plane signaling (such as CN location update), IMS signaling (such as IMS periodic report), paging reception, RAN notification, rejection response to paging (such as busy indication (busy indication)), IPv6 broadcasting, and the like. Generally, the IMS has a dedicated data channel (such as protocol data unit (Protocol Data Unit, PDU) session). When data is present in a data channel used for the IMS, the type information of corresponding service and/or data can be deduced. The IMS includes at least one of the following: IMS voice, IMS SMS, IMS signaling, and the like.

### 2. Paging rejection function

In an optional embodiment of this application, the network supporting the paging rejection function may include at least one of the following: information for paging rejection sent by the terminal and sent by the network; and the network performs at least one of the following based on the information for paging rejection: stopping paging the terminal, discarding or suspending data about the terminal, and releasing a connection to the terminal.

In an optional embodiment of this application, the terminal supporting the paging rejection function may include at least one of the following: the terminal sends information for paging rejection to the network. It is not difficult to understand that the terminal supporting the paging rejection function can send information for paging rejection to the network in a case that the terminal is intended to accept received paging.

### 3. Paging restriction function

In an optional embodiment of this application, the paging restriction function includes at least one of the following: a function of restricting paging (such as not sending the paging to the terminal), and a function of restricting data (such as caching or discarding).

Optionally, the paging restriction function supported by the terminal includes at least one of the following: initiating a request to the network, where the request is used for one of the following: requesting to restrict paging and requesting to restrict data.

The data includes control plane data and/or user plane data.

Optionally, the network supporting the paging restriction function includes at least one of the following: restricting paging according to a request of the terminal and restricting data according to the request of the terminal.

### 4. Connection release function, which may be referred to as a terminal request release function

In an optional embodiment of this application, the connection release function includes at least one of the following: a function of releasing the connection between the terminal and the network, and a function of configuring the terminal to a non-connected state.

Optionally, the terminal supporting the paging rejection function includes: initiating a request to the network, where the request is used for one of the following: requesting to leave the network, requesting to release a connection between the terminal and the network, and requesting to configure the terminal to a non-connected state.

Optionally, the network supporting the paging rejection function includes: releasing a connection between the terminal and the network according to a request of the terminal, or configuring the terminal to a non-connected state.

In an optional embodiment of this application, information for indicating to request to leave the network includes at least one of the following: a request for releasing a connection between the terminal and the network, and a request for configuring the terminal to a non-connected state.

### 5. Paging collision control function, including a paging collision avoidance function

In an optional embodiment of this application, the terminal supporting paging collision control includes: initiating a request to the network, where the request is used for one of the following: requesting to avoid paging collision, requesting a user identifier offset, and requesting to update a user identifier.

Optionally, the network supporting the paging collision control function includes: configuring a terminal identifier offset or updating a user identifier according to a request of the terminal.

The terminal identifier includes at least one of the following: IMSI, SUPI, SUCI, GUTI, and 5G-GUTI.

The following describes in detail an information processing method provided in the embodiments of this application by using some embodiments and application scenarios thereof with reference to the accompanying drawings.

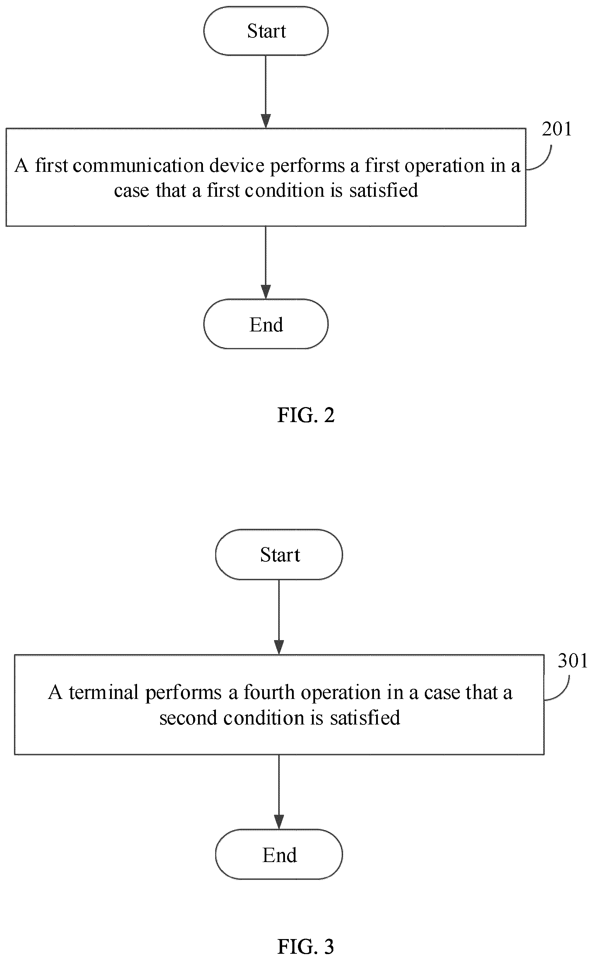

Referring to FIG. 2, FIG. 2 is a flowchart of an information processing method according to an embodiment of this application. The method is applied to a first communication device, such as a core-network network element, and the core-network network element may include but is not limited to an AMF, an MME, and the like. As shown in FIG. 2, the method includes the following steps.

Step 201: The first communication device performs a first operation in a case that a first condition is satisfied.

The first operation includes at least one of the following: a second operation and a third operation.

The second operation includes at least one of the following:
(a) determining one of the following: a first feature being not supported and a multi-subscriber feature being not supported;
(b) storing one of the following in a context of a terminal: a first feature being not supported and a multi-subscriber feature being not supported; and
(c) sending one of the following to a first target end: a first feature being not supported and a multi-subscriber feature being not supported; where the multi-subscriber feature is an optimization function for a multi-subscriber terminal.

The third operation includes at least one of the following:
(a) rejecting a request of the terminal for a first-feature related operation, or rejecting a request of the terminal for a multi-subscriber-feature related operation;
(b) ignoring a request of the terminal for a first-feature related operation, or ignoring a request of the terminal for a multi-subscriber-feature related operation;
(c) not performing a first-feature related operation for the terminal, or not performing a multi-subscriber-feature related operation for the terminal;
(d) based on connection release request information of the terminal, performing at least one of the following: deregistering the terminal and releasing a connection between the terminal and a network; and
(e) based on paging rejection information of the terminal, performing at least one of the following: stopping paging the terminal, deregistering the terminal, and releasing a connection between the terminal and the network; where
the first target end includes at least one of the following: a terminal and a RAN network element.

In an implementation, the first feature being not supported one of the following: the first network does not support the first feature, and the first network does not have a capability related to the first feature.

In an implementation, the multi-subscriber feature being not supported one of the following: the first network does not support the multi-subscriber feature, and the first network does not have a capability related to the multi-subscriber feature.

In an implementation, even if the terminal and/or the network has the capability of the first feature or the multi-subscriber feature, in a case that the first condition is satisfied, the first communication device sends, to the first target end, the first feature being not supported or the multi-subscriber feature being not supported. It is not difficult to understand that with such not-supporting indication, the terminal can be restricted from using the first feature or the multi-subscriber feature.

In an implementation, the first feature (feature) is only applied to a multi-subscriber terminal. In this case, the first feature is equivalent to the multi-subscriber feature.

In another implementation, the first feature can be applied to other terminals than the multi-subscriber terminal.

In an implementation, for the request of the terminal for the first-feature related operation to which confirmation information needs to be returned, the request of the terminal for the first-feature related operation can be rejected; and if there is no need to return confirmation information, the request of the terminal for the first-feature related operation can be ignored.

In an implementation, for the request of the terminal for the multi-subscriber-feature related operation to which confirmation information needs to be returned, the request of the terminal for the multi-subscriber-feature related operation can be rejected; and if there is no need to return confirmation information, the request of the terminal for the multi-subscriber-feature related operation can be ignored.

Based on the connection release request information of the terminal, at least one of the following is executed: deregistering the terminal and releasing a connection between the terminal and the network. Based on the paging rejection information of the terminal, at least one of the following is executed: stopping paging the terminal, deregistering the terminal, and releasing a connection between the terminal and the network. In the above scenario, in an implementation, the deregistration is local deregistration (for example, no deregistration signaling is sent to the terminal), and the connection between the terminal and the network may be locally releasing the connection between the terminal and the network (for example, no connection release signaling is sent to the terminal).

In an optional embodiment of this application, in a case that the first operation includes the second operation, the first condition includes at least one of the following: the terminal performs emergency registration with a first network, and the terminal performs an emergency service in the first network; where
the first communication device is a network-side device in the first network.

In an optional embodiment of this application, in a case that the first operation includes the third operation, the first condition includes at least one of the following: the terminal performs emergency registration with a first network; the terminal performs an emergency service in the first network; and the context of the terminal indicates one of the following: the first feature being not supported, and the optimization function for the multi-subscriber terminal being not supported; where
the first communication device is a network-side device in the first network.

In an optional embodiment of this application, the first feature or the multi-subscriber feature includes at least one of the following: a paging cause indication function, a connection release function, a paging rejection function, a paging restriction function, and a paging collision control function.

In an implementation, in a case that the first condition is satisfied, the first feature being not supported includes at least one of the following: a paging cause indication function being not supported, a paging restriction function being not supported, a paging rejection function being not supported, and a paging collision control function being not supported. In this case, the connection release function can also be supported.

In another implementation, in a case that the first condition is satisfied, the first feature being not supported includes at least one of the following: a paging cause indication function being not supported, a paging restriction function being not supported, and a paging collision control function being not supported. In this case, the connection release function and the paging rejection function can also be supported.

In an implementation, the multi-subscriber feature being not supported may mean that all optimization functions for the multi-subscriber terminal are not supported.

In an optional embodiment of this application, the first-feature related operation or the multi-subscriber-feature related operation includes at least one of the following:
carrying a paging cause in a paging message (the paging cause includes voice);
releasing a connection between the terminal and the first network based on connection release request information of the terminal;
restricting paging and/or downlink data (including user plane data and/or control plane data) for the terminal based on paging restriction information of the terminal; and
authorizing a terminal identifier offset (Offset) (such as IMSI Offset) to the terminal based on a request of the terminal.

In an optional embodiment of this application, the request for the first-feature related operation or the request for the multi-subscriber-feature related operation includes at least one of the following:
connection release request information sent by the terminal;
a request for a terminal identifier offset from the terminal;
a request for updating a terminal identifier from the terminal;
a paging rejection response sent by the terminal; and
paging restriction information sent by the terminal, used for requesting paging restriction for the terminal.

In an optional embodiment of this application, the not performing a first-feature related operation for the terminal, or not performing a multi-subscriber-feature related operation for the terminal includes at least one of the following:
during sending of a paging message specific to the terminal, not carrying a paging cause in the paging message (the paging cause includes voice);
deregistering the terminal based on the connection release request information of the terminal; and not restricting paging and/or downlink data (including user plane data and/or control plane data) specific to the terminal for the terminal; and
not authorizing a terminal identifier offset (such as IMSI Offset) to the terminal.

In an optional embodiment of this application, the rejecting a request of the terminal for a first-feature related operation, or rejecting a request of the terminal for a multi-subscriber-feature related operation includes at least one of the following:
rejecting a request for a terminal identifier offset from the terminal;
rejecting a request for updating a terminal identifier from the terminal; and
rejecting paging restriction information sent by the terminal.

In an optional embodiment of this application, the ignoring a request of the terminal for a first-feature related operation, or ignoring a request of the terminal for a multi-subscriber-feature related operation includes at least one of the following:
ignoring a request for a terminal identifier offset from the terminal;
ignoring a request for updating a terminal identifier; and
ignoring paging restriction information sent by the terminal.

It is not difficult to understand that according to this embodiment, regardless of whether the terminal requests the first-feature related operation or the multi-subscriber-feature related operation, the first communication device can indicate, to the terminal, the first feature being not supported or the multi-subscriber feature being not supported, so that the network side and the terminal can prohibit the first feature or the multi-subscriber feature in some scenarios (such as emergency service scenarios), thereby improving reliability of the communication system.

Referring to FIG. 3, FIG. 3 is a flowchart of an information processing method according to an embodiment of this application. The method is applied to a terminal. As shown in FIG. 3, the method includes the following steps.

Step 301: The terminal performs a fourth operation in a case that a second condition is satisfied.

The fourth operation includes at least one of the following:
(1) not applying a first feature to a first network or not applying a multi-subscriber feature to a first network; where the multi-subscriber feature is an optimization function for a multi-subscriber terminal;
(2) not initiating a first-feature related operation in the first network, or not initiating the multi-subscriber-feature related operation in the first network;
(3) not performing paging optimization in the first network;
(4) not sending paging restriction information to the first network in a case that the terminal moves out of a location area to make a mobility registration update request and/or does not known whether the first feature or multi-subscriber feature is supported in a new location area; and
(5) deregistering from the first network in a case that the terminal needs to leave the first network.

The paging optimization includes at least one of the following: avoiding a paging collision and optimizing a paging reception probability.

In an embodiment, the paging collision means that a first subscriber of the terminal is registered to the first network and a second subscriber is registered to a second network, and a paging time of the first subscriber in the first network collides with a paging time of the second subscriber in the second network. When the first subscriber of the terminal is registered urgently to the first network, the paging collision is not resolved in the first network (for example, a mobility registration request is not sent to the first network). In this case, optionally, the paging collision can be resolved through the second network.

In an embodiment, in a case that mobility registration updating is caused due to moving out of the location area, the terminal may not know in this case whether the first feature or the multi-subscriber feature is supported, and may send paging restriction information to the first network. Therefore, in a case that the second condition is satisfied and mobility registration updating is caused due to moving out of the location area, paging restriction information is not sent to the first network.

In an optional embodiment of this application, the second condition includes that the terminal performs emergency registration in the first network.

In an optional embodiment of this application, the second condition further includes at least one of the following: a paging time of the terminal in the first network collides with a paging time of the terminal in other networks; and
a paging reception probability of the terminal in the first network decreases, or the terminal needs to improve a paging reception probability in the first network.

In an optional embodiment of this application, the first feature or the multi-subscriber feature includes at least one of the following: a paging cause indication function, a connection release function, a paging rejection function, a paging restriction function, and a paging collision control function.

In an optional embodiment of this application, the not performing paging optimization in the first network includes: not performing a fifth operation in the first network. The fifth operation includes at least one of the following: a paging-optimization-triggered requirement for updating a temporary terminal identifier, where the temporary terminal identifier is a temporary terminal identifier allocated for the terminal by the first network; paging-optimization-triggered transmission of a mobility registration request to the first network; a paging-optimization-triggered request to the first network, where the request to the first network includes one of the following: an updated terminal identifier and a terminal identifier offset; and a paging-optimization-triggered paging restriction request to the first network.

In an implementation, the fifth operation does not depend on a capability of the first feature or the multi-subscriber feature. That is, in a case that not supporting the first feature or not supporting the multi-subscriber feature is received, the fifth operation can still be performed. Therefore, it is necessary to stipulate that the fifth operation should not be performed in the first network in a case that the second condition is not satisfied.

In an optional embodiment of this application, the not initiating a first-feature related operation in the first network, or not initiating the multi-subscriber-feature related operation in the first network includes at least one of the following:
not sending connection release request information to the first network;
not sending a request for a terminal identifier offset to the first network;
not sending a request for updating a terminal identifier to the first network (such as a mobility registration request, where the mobility registration request triggers updating of a temporary terminal identifier);
not sending a paging rejection response to the first network; and
not sending paging restriction information to the first network.

In an optional embodiment of this application, the deregistering from the first network includes any one of the following:
sending a deregistration request to the first network; and
locally deregistering from the first network, for example, a status in the first network is set to a deregistered state.

In an implementation, for locally deregistering from the first network, a deregistration request may not sent to the first network.

It is not difficult to understand that according to this embodiment, in the emergency registration scenario, the terminal side can prohibit the first-feature related operation or the multi-subscriber-feature related operation. In particular, some multi-subscriber-feature related operations are not limited by the first feature being not supported or the multi-subscriber feature being not supported sent by the network. In the emergency registration scenario, it can be prohibited at the terminal side to implement communication reliability.

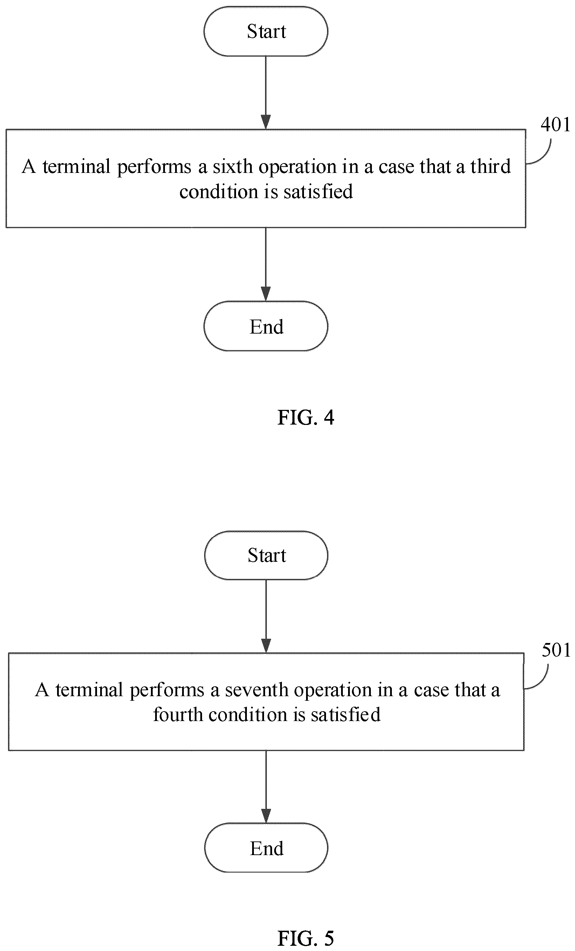

Referring to FIG. 4, FIG. 4 is a flowchart of an information processing method according to an embodiment of this application. The method is applied to a terminal. As shown in FIG. 4, the method includes the following steps.

Step 401: The terminal performs a sixth operation in a case that a third condition is satisfied.

The sixth operation includes at least one of the following:
applying a first feature or a multi-subscriber feature to a first network; where the multi-subscriber feature is an optimization function for a multi-subscriber terminal;
initiating a first-feature related operation in the first network, or initiating the multi-subscriber-feature related operation in the first network;
performing paging optimization in the first network; and
sending paging restriction information to the first network in a case that the terminal moves out of a location area to make a mobility registration update request and/or does not known whether the first feature or multi-subscriber feature is supported in a new location area.

In an implementation, the applying the first feature or the multi-subscriber feature to the first network includes: determining that the first feature or the multi-subscriber feature can be applied to the first network.

In an implementation, the initiating the first-feature related operation in the first network includes determining that the first-feature related operation can be initiated in the first network.

In an implementation, the initiating the multi-subscriber-feature related operation in the first network includes determining that the multi-subscriber-feature related operation can be initiated in the first network.

In an implementation, the performing paging optimization in the first network includes determining that paging optimization can be performed in the first network.
connection release request information can be sent to the first network in a case that the terminal needs to leave the first network.

The paging optimization includes at least one of the following: avoiding a paging collision and optimizing a paging reception probability.

In an optional embodiment of this application, the third condition includes that a type of registration performed by the terminal in the first network does not include emergency registration.

In an optional embodiment of this application, the third condition further includes at least one of the following: a paging time of the terminal in the first network collides with a paging time of the terminal in other networks; and
a paging reception probability of the terminal in the first network decreases, or the terminal needs to improve a paging reception probability in the first network.

In an optional embodiment of this application, the first feature or the multi-subscriber feature includes at least one of the following: a paging cause indication function, a connection release function, a paging rejection function, a paging restriction function, and a paging collision control function.

In an optional embodiment of this application, the being able to perform paging optimization in the first network includes: being able to perform a fifth operation in the first network;
where
the fifth operation includes at least one of the following:
a paging-optimization-triggered requirement for updating a temporary terminal identifier, where the temporary terminal identifier is a temporary terminal identifier allocated for the terminal by the first network;
paging-optimization-triggered transmission of a mobility registration request to the first network;
a paging-optimization-triggered request to the first network, where the request to the first network includes one of the following: an updated terminal identifier and a terminal identifier offset; and
a paging-optimization-triggered paging restriction request to the first network.

It is not difficult to understand that according to this embodiment, in the non-emergency registration scenario, the terminal side can perform the first-feature related operation or the multi-subscriber-feature related operation, thus implementing communication optimization.

Referring to FIG. 5, FIG. 5 is a flowchart of an information processing method according to an embodiment of this application. The method is applied to a terminal. As shown in FIG. 5, the method includes the following steps.

Step 501: The terminal performs a seventh operation in a case that a fourth condition is satisfied.

The fourth condition includes at least one of the following:
the terminal is in a registered state or a connected state in a third network;
the terminal uses first subscriber data to access the third network; and
the terminal passes device identification authentication of the third network by using a first terminal device identifier, or a terminal device identifier bound by the first subscriber data is a first terminal device identifier; and
the seventh operation includes at least one of the following:
   maintaining a terminal device identifier corresponding to the first subscriber data as the first terminal device identifier; and
   sending the first terminal device identifier to the third network in a case that the third network requests to obtain an device identifier of the terminal.

In an optional embodiment of this application, the maintaining a terminal device identifier corresponding to the first subscriber data as the first terminal device identifier includes at least one of the following: maintaining the terminal device identifier corresponding to the first subscriber data as the first terminal device identifier before the terminal deregisters from the third network and/or from the perspective of the third network.

It is not difficult to understand that according to this embodiment, in a case that the terminal is in a registered state or a connected state, the terminal device identifier remains bound to the subscriber data, so as to ensure successful device identifier verification by the network.

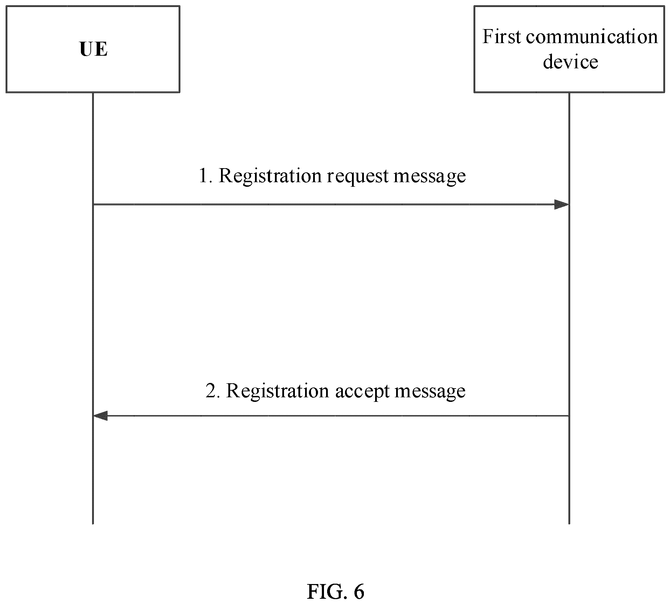

In Embodiment 1, as shown in FIG. 6, a registration procedure triggered by UE may include:
Step 601: The UE sends a registration request message to a first communication device (such as an AMF).
   In the registration request message, a registration type is emergency registration.
Step 602: The first communication device sends a registration accept message to the UE. In the registration accept message, the first communication device indicates, to the UE, not supporting the first feature or not supporting the multi-subscriber feature (such as multiple USIM (Multiple USIM) function).

It should be noted that, for the information processing method provided by the embodiments of this application, the execution body may be an information processing apparatus, or a control module for executing the information processing method in the information processing apparatus. In the embodiments of this application, the information processing method being performed by the information processing apparatus is used as an example to describe the information processing apparatus provided in the embodiments of this application.

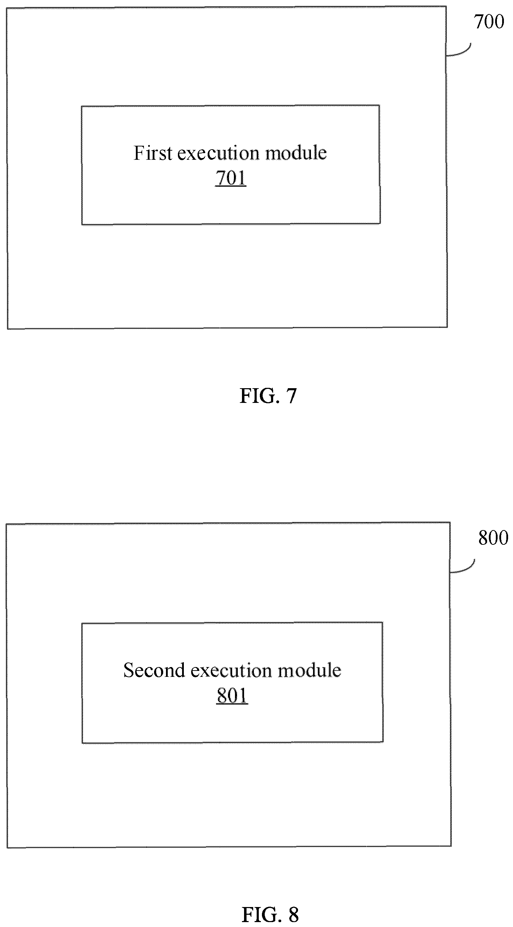

Referring to FIG. 7, FIG. 7 is a schematic structural diagram of an information processing apparatus according to an embodiment of this application. The apparatus is applied to a first communication device. As shown in FIG. 7, the information processing apparatus 700 includes:
a first execution module 701, configured to perform a first operation in a case that a first condition is satisfied; where
the first operation includes at least one of the following: a second operation and a third operation;
the second operation includes at least one of the following:
   determining one of the following: a first feature being not supported and a multi-subscriber feature being not supported;
   storing one of the following in a context of a terminal: a first feature being not supported and a multi-subscriber feature being not supported; and
   sending one of the following to a first target end: a first feature being not supported and a multi-subscriber feature being not supported; where the multi-subscriber feature is an optimization function for a multi-subscriber terminal; and
   the third operation includes at least one of the following:
      rejecting a request of the terminal for a first-feature related operation, or rejecting a request of the terminal for a multi-subscriber-feature related operation;
      ignoring a request of the terminal for a first-feature related operation, or ignoring a request of the terminal for a multi-subscriber-feature related operation;
      not performing a first-feature related operation for the terminal, or not performing a multi-subscriber-feature related operation for the terminal;
      based on connection release request information of the terminal, performing at least one of the following: deregistering the terminal and releasing a connection between the terminal and a network; and
      based on paging rejection information of the terminal, performing at least one of the following: stopping paging the terminal, deregistering the terminal, and releasing a connection between the terminal and the network; where
      the first target end includes at least one of the following: a terminal and a RAN network element.

In an optional embodiment of this application, in a case that the first operation includes the second operation, the first condition includes at least one of the following: the terminal performs emergency registration with a first network, and the terminal performs an emergency service in the first network; where
the first communication device is a network-side device in the first network.

In an optional embodiment of this application, in a case that the first operation includes the third operation, the first condition includes at least one of the following: the terminal performs emergency registration with a first network; the terminal performs an emergency service in the first network; and the context of the terminal indicates one of the following: the first feature being not supported, and the optimization function for the multi-subscriber terminal being not supported; where
the first communication device is a network-side device in the first network.

In an optional embodiment of this application, the first feature or the multi-subscriber feature includes at least one of the following: a paging cause indication function, a connection release function, a paging rejection function, a paging restriction function, and a paging collision control function.

In an optional embodiment of this application, the first-feature related operation or the multi-subscriber-feature related operation includes at least one of the following:
carrying a paging cause in a paging message;
releasing a connection between the terminal and the first network based on connection release request information of the terminal;
restricting paging and/or downlink data (including user plane data and/or control plane data) for the terminal based on paging restriction information of the terminal; and
authorizing a terminal identifier offset to the terminal based on a request of the terminal.

In an optional embodiment of this application, the request for the first-feature related operation or the request for the multi-subscriber-feature related operation includes at least one of the following:
connection release request information sent by the terminal;
a request for a terminal identifier offset from the terminal;
a request for updating a terminal identifier from the terminal;
a paging rejection response sent by the terminal; and
paging restriction information sent by the terminal, used for requesting paging restriction for the terminal.

In an optional embodiment of this application, the not performing a first-feature related operation for the terminal, or not performing a multi-subscriber-feature related operation for the terminal includes at least one of the following:
during sending of a paging message specific to the terminal, not carrying a paging cause in the paging message;
deregistering the terminal based on the connection release request information of the terminal; and not restricting paging and/or downlink data specific to the terminal for the terminal; and
not authorizing a terminal identifier offset to the terminal.

In an optional embodiment of this application, the rejecting a request of the terminal for a first-feature related operation, or rejecting a request of the terminal for a multi-subscriber-feature related operation includes at least one of the following:
rejecting a request for a terminal identifier offset from the terminal;
rejecting a request for updating a terminal identifier from the terminal; and
rejecting paging restriction information sent by the terminal.

In an optional embodiment of this application, the ignoring a request of the terminal for a first-feature related operation, or ignoring a request of the terminal for a multi-subscriber-feature related operation includes at least one of the following:
ignoring a request for a terminal identifier offset from the terminal;
ignoring a request for updating a terminal identifier; and
ignoring paging restriction information sent by the terminal.

In this embodiment of this application, the information processing apparatus 700 is capable of implementing the processes implemented in the method embodiment shown in FIG. 2 of this application, with the same beneficial effects achieved. To avoid repetition, details are not described herein again.

Referring to FIG. 8, FIG. 8 is a schematic structural diagram of an information processing apparatus according to an embodiment of this application. The apparatus is applied to a terminal. As shown in FIG. 8, the information processing apparatus 800 includes:
a second execution module 801, configured to perform a fourth operation in a case that a second condition is satisfied; where
the fourth operation includes at least one of the following:
   not applying a first feature to a first network or not applying a multi-subscriber feature to a first network; where the multi-subscriber feature is an optimization function for a multi-subscriber terminal;
   not initiating a first-feature related operation in the first network, or not initiating the multi-subscriber-feature related operation in the first network;
   not performing paging optimization in the first network;
   not sending paging restriction information to the first network in a case that the terminal moves out of a location area to make a mobility registration update request and/or does not known whether the first feature or multi-subscriber feature is supported in a new location area; and
   deregistering from the first network in a case that the terminal needs to leave the first network.

The paging optimization includes at least one of the following: avoiding a paging collision and optimizing a paging reception probability.

In an optional embodiment of this application, the second condition includes that the terminal performs emergency registration in the first network.

In an optional embodiment of this application, the second condition further includes at least one of the following: a paging time of the terminal in the first network collides with a paging time of the terminal in other networks; and
a paging reception probability of the terminal in the first network decreases, or the terminal needs to improve a paging reception probability in the first network.

In an optional embodiment of this application, the first feature or the multi-subscriber feature includes at least one of the following: a paging cause indication function, a connection release function, a paging rejection function, a paging restriction function, and a paging collision control function.

In an optional embodiment of this application, the not performing paging optimization in the first network includes: not performing a fifth operation in the first network;
where
the fifth operation includes at least one of the following:
a paging-optimization-triggered requirement for updating a temporary terminal identifier, where the temporary terminal identifier is a temporary terminal identifier allocated for the terminal by the first network;
paging-optimization-triggered transmission of a mobility registration request to the first network;
a paging-optimization-triggered request to the first network, where the request to the first network includes one of the following: an updated terminal identifier and a terminal identifier offset; and
a paging-optimization-triggered paging restriction request to the first network.

In an optional embodiment of this application, the not initiating a first-feature related operation in the first network, or not initiating the multi-subscriber-feature related operation in the first network includes at least one of the following:
not sending connection release request information to the first network;
not sending a request for a terminal identifier offset to the first network;
not sending a request for updating a terminal identifier to the first network;
not sending a paging rejection response to the first network; and
not sending paging restriction information to the first network.

In an optional embodiment of this application, the deregistering from the first network includes any one of the following:
sending a deregistration request to the first network; and
locally deregistering from the first network.

In this embodiment of this application, the information processing apparatus 800 is capable of implementing the processes implemented in the method embodiment shown in FIG. 3 of this application, with the same beneficial effects achieved. To avoid repetition, details are not described herein again.

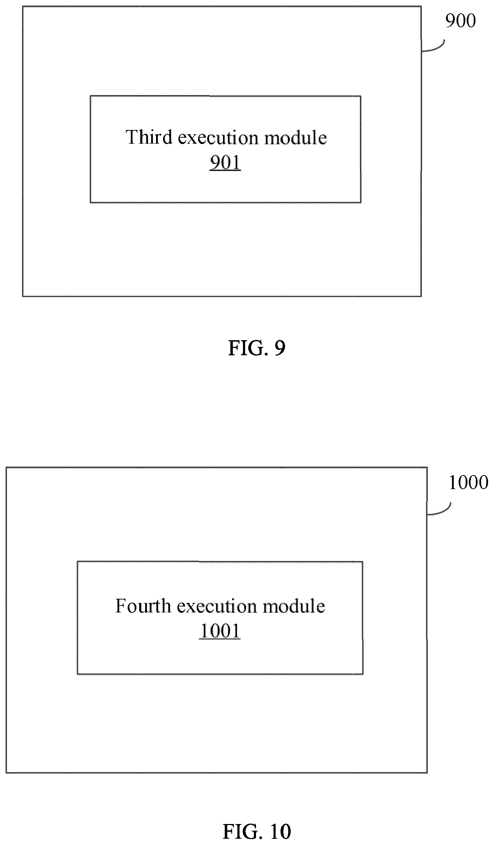

Referring to FIG. 9, FIG. 9 is a schematic structural diagram of an information processing apparatus according to an embodiment of this application. The apparatus is applied to a terminal. As shown in FIG. 9, the information processing apparatus 900 includes:
a third execution module 901, configured to perform a sixth operation in a case that a third condition is satisfied; where
the sixth operation includes at least one of the following:
   applying a first feature or a multi-subscriber feature to a first network; where the multi-subscriber feature is an optimization function for a multi-subscriber terminal;
   initiating a first-feature related operation in the first network, or initiating the multi-subscriber-feature related operation in the first network;
   performing paging optimization in the first network; and
   sending paging restriction information to the first network in a case that the terminal moves out of a location area to make a mobility registration update request and/or does not known whether the first feature or multi-subscriber feature is supported in a new location area.

In an implementation, the applying the first feature or the multi-subscriber feature to the first network includes: determining that the first feature or the multi-subscriber feature can be applied to the first network.

In an implementation, the initiating the first-feature related operation in the first network includes determining that the first-feature related operation can be initiated in the first network.

In an implementation, the initiating the multi-subscriber-feature related operation in the first network includes determining that the multi-subscriber-feature related operation can be initiated in the first network.

In an implementation, the performing paging optimization in the first network includes determining that paging optimization can be performed in the first network.
connection release request information can be sent to the first network in a case that the terminal needs to leave the first network.

The paging optimization includes at least one of the following: avoiding a paging collision and optimizing a paging reception probability.

In an optional embodiment of this application, the third condition includes that a type of registration performed by the terminal in the first network does not include emergency registration.

In an optional embodiment of this application, the third condition further includes at least one of the following: a paging time of the terminal in the first network collides with a paging time of the terminal in other networks; and
a paging reception probability of the terminal in the first network decreases, or the terminal needs to improve a paging reception probability in the first network.

In an optional embodiment of this application, the first feature or the multi-subscriber feature includes at least one of the following: a paging cause indication function, a connection release function, a paging rejection function, a paging restriction function, and a paging collision control function.

In an optional embodiment of this application, the being able to perform paging optimization in the first network includes: being able to perform a fifth operation in the first network;
where
the fifth operation includes at least one of the following:
a paging-optimization-triggered requirement for updating a temporary terminal identifier, where the temporary terminal identifier is a temporary terminal identifier allocated for the terminal by the first network;
paging-optimization-triggered transmission of a mobility registration request to the first network;
a paging-optimization-triggered request to the first network, where the request to the first network includes one of the following: an updated terminal identifier and a terminal identifier offset; and
a paging-optimization-triggered paging restriction request to the first network.

In this embodiment of this application, the information processing apparatus 900 is capable of implementing the processes implemented in the method embodiment shown in FIG. 4 of this application, with the same beneficial effects achieved. To avoid repetition, details are not described herein again.

Referring to FIG. 10, FIG. 10 is a schematic structural diagram of an information processing apparatus according to an embodiment of this application. The apparatus is applied to a terminal. As shown in FIG. 10, the information processing apparatus 1000 includes:
a fourth execution module 1001, configured to perform a seventh operation in a case that a fourth condition is satisfied; where
the fourth condition includes at least one of the following:
   the terminal is in a registered state or a connected state in a third network;
   the terminal uses first subscriber data to access the third network; and
   the terminal passes device identification authentication of the third network by using a first terminal device identifier, or a terminal device identifier bound by the first subscriber data is a first terminal device identifier; and
   the seventh operation includes at least one of the following:
      maintaining a terminal device identifier corresponding to the first subscriber data as the first terminal device identifier; and
      sending the first terminal device identifier to the third network in a case that the third network requests to obtain an device identifier of the terminal.

In an optional embodiment of this application, the maintaining a terminal device identifier corresponding to the first subscriber data as the first terminal device identifier includes at least one of the following: maintaining the terminal device identifier corresponding to the first subscriber data as the first terminal device identifier before the terminal deregisters from the third network and/or from the perspective of the third network.

In this embodiment of this application, the information processing apparatus 1000 is capable of implementing the processes implemented in the method embodiment shown in FIG. 5 of this application, with the same beneficial effects achieved. To avoid repetition, details are not described herein again.

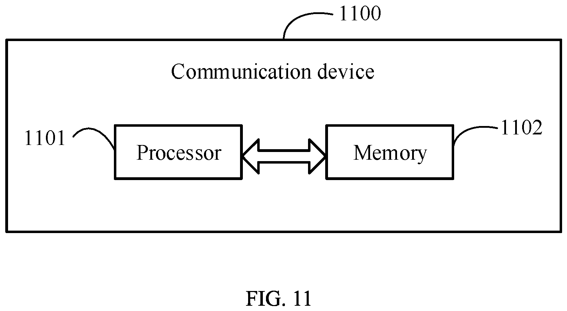

As shown in FIG. 11, an embodiment of this application further provides a communication device 1100, including a processor 1101, a memory 1102, and a program or instructions stored in the memory 1102 and capable of running on the processor 1101. When the program or the instructions are executed by the processor 1101, the processes of the foregoing embodiments of the information processing method are implemented, with the same technical effects achieved. To avoid repetition, details are not described herein again.

An embodiment of this application further provides a readable storage medium. The readable storage medium may be non-volatile or volatile. A program or instructions are stored in the readable storage medium. When the program or the instructions are executed by a processor, the processes of the foregoing embodiment of the information processing method can be implemented, with the same technical effects achieved. To avoid repetition, details are not described herein again.

An embodiment of this application further provides a computer program/program product, where the computer program/program product is stored in a non-transitory storage medium, and when being executed by at least one processor, the computer program/program product is configured to implement the processes of the foregoing information processing method embodiments, with the same technical effects achieved. To avoid repetition, details are not repeated herein.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiment of the information processing method, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information processing method, comprising:
performing, by a first communication device, a first operation in a case that a first condition is satisfied; wherein
the first operation comprises at least one of the following: a second operation and a third operation;
the second operation comprises at least one of the following:
determining one of the following: a first feature being not supported and a multi-subscriber feature being not supported;
storing one of the following in a context of a terminal: a first feature being not supported and a multi-subscriber feature being not supported; and
sending one of the following to a first target end: a first feature being not supported and a multi-subscriber feature being not supported; wherein the multi-subscriber feature is an optimization function for a multi-subscriber terminal; and
the third operation comprises at least one of the following:
rejecting a request of the terminal for a first-feature related operation, or rejecting a request of the terminal for a multi-subscriber-feature related operation;
ignoring a request of the terminal for a first-feature related operation, or ignoring a request of the terminal for a multi-subscriber-feature related operation;
not performing a first-feature related operation for the terminal, or not performing a multi-subscriber-feature related operation for the terminal;
based on connection release request information of the terminal, performing at least one of the following: deregistering the terminal and releasing a connection between the terminal and a network; and
based on paging rejection information of the terminal, performing at least one of the following: stopping paging the terminal, deregistering the terminal, and releasing a connection between the terminal and the network; wherein
the first target end comprises at least one of the following: a terminal and a RAN network element.

2. The method according to claim 1, wherein
in a case that the first operation comprises the second operation, the first condition comprises at least one of the following: the terminal performs emergency registration with a first network, and the terminal performs an emergency service in the first network; wherein
the first communication device is a network-side device in the first network.

3. The method according to claim 1, wherein
in a case that the first operation comprises the third operation, the first condition comprises at least one of the following: the terminal performs emergency registration with a first network; the terminal performs an emergency service in the first network; and the context of the terminal indicates one of the following: the first feature being not supported, and the optimization function for the multi-subscriber terminal being not supported; wherein
the first communication device is a network-side device in the first network.

4. The method according to any one of claims 1 to 3, wherein the first feature or the multi-subscriber feature comprises at least one of the following: a paging cause indication function, a connection release function, a paging rejection function, a paging restriction function, and a paging collision control function.

5. The method according to claim 1, wherein the first-feature related operation or the multi-subscriber-feature related operation comprises at least one of the following:
carrying a paging cause in a paging message;
releasing a connection between the terminal and the first network based on connection release request information of the terminal;
restricting paging and/or downlink data for the terminal based on paging restriction information of the terminal; and
authorizing a terminal identifier offset to the terminal based on a request of the terminal.

6. The method according to claim 1 or 5, wherein the request for the first-feature related operation or the request for the multi-subscriber-feature related operation comprises at least one of the following:
connection release request information sent by the terminal;
a request for a terminal identifier offset from the terminal;
a request for updating a terminal identifier from the terminal;
a paging rejection response sent by the terminal; and
paging restriction information sent by the terminal, used for requesting paging restriction for the terminal.

7. The method according to claim 1, 5, or 6, wherein the not performing a first-feature related operation for the terminal, or not performing a multi-subscriber-feature related operation for the terminal comprises at least one of the following:
during sending of a paging message specific to the terminal, not carrying a paging cause in the paging message;
deregistering the terminal based on the connection release request information of the terminal; and not restricting paging and/or downlink data specific to the terminal for the terminal; and
not authorizing a terminal identifier offset to the terminal.

8. The method according to claim 1, wherein the rejecting a request of the terminal for a first-feature related operation, or rejecting a request of the terminal for a multi-subscriber-feature related operation comprises at least one of the following:
rejecting a request for a terminal identifier offset from the terminal;
rejecting a request for updating a terminal identifier from the terminal; and
rejecting paging restriction information sent by the terminal.

9. The method according to claim 1, wherein the ignoring a request of the terminal for a first-feature related operation, or ignoring a request of the terminal for a multi-subscriber-feature related operation comprises at least one of the following:
ignoring a request for a terminal identifier offset from the terminal;
ignoring a request for updating a terminal identifier; and
ignoring paging restriction information sent by the terminal.

10. An information processing method, comprising:
performing, by a terminal, a fourth operation in a case that a second condition is satisfied; wherein
the fourth operation comprises at least one of the following:
not applying a first feature to a first network or not applying a multi-subscriber feature to a first network; wherein the multi-subscriber feature is an optimization function for a multi-subscriber terminal;
not initiating a first-feature related operation in the first network, or not initiating the multi-subscriber-feature related operation in the first network;
not performing paging optimization in the first network;
not sending paging restriction information to the first network in a case that the terminal moves out of a location area to make a mobility registration update request and/or does not known whether the first feature or multi-subscriber feature is supported in a new location area; and
deregistering from the first network in a case that the terminal needs to leave the first network; wherein
the paging optimization comprises at least one of the following: avoiding a paging collision and optimizing a paging reception probability.

11. The method according to claim 10, wherein the second condition comprises that the terminal performs emergency registration in the first network.

12. The method according to claim 11, wherein the second condition further comprises at least one of the following: a paging time of the terminal in the first network collides with a paging time of the terminal in other networks; and
a paging reception probability of the terminal in the first network decreases, or the terminal needs to improve a paging reception probability in the first network.

13. The method according to any one of claims 10 to 12, wherein the first feature or the multi-subscriber feature comprises at least one of the following: a paging cause indication function, a connection release function, a paging rejection function, a paging restriction function, and a paging collision control function.

14. The method according to any one of claims 10 to 12, wherein the not performing paging optimization in the first network comprises: not performing a fifth operation in the first network;
wherein
the fifth operation comprises at least one of the following:
a paging-optimization-triggered requirement for updating a temporary terminal identifier, wherein the temporary terminal identifier is a temporary terminal identifier allocated for the terminal by the first network;
paging-optimization-triggered transmission of a mobility registration request to the first network;
a paging-optimization-triggered request to the first network, wherein the request to the first network comprises one of the following: an updated terminal identifier and a terminal identifier offset; and
a paging-optimization-triggered paging restriction request to the first network.

15. The method according to any one of claims 10 to 12, wherein the not initiating a first-feature related operation in the first network, or not initiating the multi-subscriber-feature related operation in the first network comprises at least one of the following:
not sending connection release request information to the first network;
not sending a request for a terminal identifier offset to the first network;
not sending a request for updating a terminal identifier to the first network;
not sending a paging rejection response to the first network; and
not sending paging restriction information to the first network.

16. The method according to any one of claims 10 to 12, wherein the deregistering from the first network comprises any one of the following:
sending a deregistration request to the first network; and
locally deregistering from the first network.

17. An information processing method, comprising:
performing, by a terminal, a sixth operation in a case that a third condition is satisfied; wherein
the sixth operation comprises at least one of the following:
applying a first feature or a multi-subscriber feature to a first network; wherein the multi-subscriber feature is an optimization function for a multi-subscriber terminal;
initiating a first-feature related operation in the first network, or initiating the multi-subscriber-feature related operation in the first network;
performing paging optimization in the first network;
sending paging restriction information to the first network in a case that the terminal moves out of a location area to make a mobility registration update request and/or does not known whether the first feature or multi-subscriber feature is supported in a new location area; and
being able to send connection release request information to the first network in a case that the terminal needs to leave the first network; wherein
the paging optimization comprises at least one of the following: avoiding a paging collision and optimizing a paging reception probability.

18. The method according to claim 17, wherein the third condition comprises that a type of registration performed by the terminal in the first network does not comprise emergency registration.

19. The method according to claim 18, wherein the third condition further comprises at least one of the following: a paging time of the terminal in the first network collides with a paging time of the terminal in other networks; and
a paging reception probability of the terminal in the first network decreases, or the terminal needs to improve a paging reception probability in the first network.

20. The method according to any one of claims 17 to 19, wherein the first feature or the multi-subscriber feature comprises at least one of the following: a paging cause indication function, a connection release function, a paging rejection function, a paging restriction function, and a paging collision control function.

21. The method according to any one of claims 17 to 19, wherein the being able to perform paging optimization in the first network comprises: being able to perform a fifth operation in the first network;
wherein
the fifth operation comprises at least one of the following:
a paging-optimization-triggered requirement for updating a temporary terminal identifier, wherein the temporary terminal identifier is a temporary terminal identifier allocated for the terminal by the first network;
paging-optimization-triggered transmission of a mobility registration request to the first network;
a paging-optimization-triggered request to the first network, wherein the request to the first network comprises one of the following: an updated terminal identifier and a terminal identifier offset; and
a paging-optimization-triggered paging restriction request to the first network.

22. An information processing method, comprising:
performing, by a terminal, a seventh operation in a case that a fourth condition is satisfied; wherein
the fourth condition comprises at least one of the following:
the terminal is in a registered state or a connected state in a third network;
the terminal uses first subscriber data to access the third network; and
the terminal passes device identification authentication of the third network by using a first terminal device identifier, or a terminal device identifier bound by the first subscriber data is a first terminal device identifier; and
the seventh operation comprises at least one of the following:
maintaining a terminal device identifier corresponding to the first subscriber data as the first terminal device identifier; and
sending the first terminal device identifier to the third network in a case that the third network requests to obtain a device identifier of the terminal.

23. The method according to claim 22, wherein the maintaining a terminal device identifier corresponding to the first subscriber data as the first terminal device identifier comprises at least one of the following: maintaining the terminal device identifier corresponding to the first subscriber data as the first terminal device identifier before the terminal deregisters from the third network and/or from the perspective of the third network.

24. An information processing apparatus, applied to a first communication device and comprising:
a first execution module, configured to perform a first operation in a case that a first condition is satisfied; wherein
the first operation comprises at least one of the following: a second operation and a third operation;
the second operation comprises at least one of the following:
determining one of the following: a first feature being not supported and a multi-subscriber feature being not supported;
storing one of the following in a context of a terminal: a first feature being not supported and a multi-subscriber feature being not supported; and
sending one of the following to a first target end: a first feature being not supported and a multi-subscriber feature being not supported; wherein the multi-subscriber feature is an optimization function for a multi-subscriber terminal; and
the third operation comprises at least one of the following:
rejecting a request of the terminal for a first-feature related operation, or rejecting a request of the terminal for a multi-subscriber-feature related operation;
ignoring a request of the terminal for a first-feature related operation, or ignoring a request of the terminal for a multi-subscriber-feature related operation;
not performing a first-feature related operation for the terminal, or not performing a multi-subscriber-feature related operation for the terminal;
based on connection release request information of the terminal, performing at least one of the following: deregistering the terminal and releasing a connection between the terminal and a network; and
based on paging rejection information of the terminal, performing at least one of the following: stopping paging the terminal, deregistering the terminal, and releasing a connection between the terminal and the network; wherein
the first target end comprises at least one of the following: a terminal and a RAN network element.

25. An information processing apparatus, applied to a terminal and comprising:
a second execution module, configured to perform a fourth operation in a case that a second condition is satisfied; wherein
the fourth operation comprises at least one of the following:
not applying a first feature to a first network or not applying a multi-subscriber feature to a first network; wherein the multi-subscriber feature is an optimization function for a multi-subscriber terminal;
not initiating a first-feature related operation in the first network, or not initiating the multi-subscriber-feature related operation in the first network;
not performing paging optimization in the first network;
not sending paging restriction information to the first network in a case that the terminal moves out of a location area to make a mobility registration update request and/or does not known whether the first feature or multi-subscriber feature is supported in a new location area; and
deregistering from the first network in a case that the terminal needs to leave the first network; wherein
the paging optimization comprises at least one of the following: avoiding a paging collision and optimizing a paging reception probability.

26. An information processing apparatus, applied to a terminal and comprising:
a third execution module, configured to perform a sixth operation in a case that a third condition is satisfied; wherein
the sixth operation comprises at least one of the following:
applying a first feature or a multi-subscriber feature to a first network; wherein the multi-subscriber feature is an optimization function for a multi-subscriber terminal;
initiating a first-feature related operation in the first network, or initiating the multi-subscriber-feature related operation in the first network;
performing paging optimization in the first network;
being able to send paging restriction information to the first network in a case that the terminal moves out of a location area to make a mobility registration update request and/or does not known whether the first feature or multi-subscriber feature is supported in a new location area; and
being able to send connection release request information to the first network in a case that the terminal needs to leave the first network; wherein
the paging optimization comprises at least one of the following: avoiding a paging collision and optimizing a paging reception probability.

27. An information processing apparatus, applied to a terminal and comprising:
a fourth execution module, configured to perform a seventh operation in a case that a fourth condition is satisfied; wherein
the fourth condition comprises at least one of the following:
the terminal is in a registered state or a connected state in a third network;
the terminal uses first subscriber data to access the third network; and
the terminal passes device identification authentication of the third network by using a first terminal device identifier, or a terminal device identifier bound by the first subscriber data is a first terminal device identifier; and
the seventh operation comprises at least one of the following:
maintaining a terminal device identifier corresponding to the first subscriber data as the first terminal device identifier; and
sending the first terminal device identifier to the third network in a case that the third network requests to obtain a device identifier of the terminal.

28. A communication device, comprising a processor, a memory, and a program or instructions stored in the memory and capable of running on the processor, wherein when the program or the instructions are executed by the processor, the steps of the information processing method according to any one of claims 1 to 9 are implemented, or the steps of the information processing method according to any one of claims 10 to 16 are implemented, or the steps of the information processing method according to any one of claims 17 to 21 are implemented, or the steps of the information processing method according to any one of claims 22 and 23 are implemented.

29. A readable storage medium, wherein the readable storage medium stores a program or instructions, and when the program or instructions are executed by a processor, the steps of the information processing method according to any one of claims 1 to 9 are implemented, or the steps of the information processing method according to any one of claims 10 to 16 are implemented, or the steps of the information processing method according to any one of claims 17 to 21 are implemented, or the steps of the information processing method according to any one of claims 22 and 23 are implemented.
